# EUROPEAN PATENT APPLICATION

(11) **EP 4 797 525 A1**
(43) Date of publication of application: **26.08.2026**
(21) Application number: 24880193.8
(22) Date of filing: 18.10.2024
(51) Int. Cl.: H02P 1/22, H02P 6/20, H02P 6/18, H02P 7/03

(54) **MOTOR DRIVING DEVICE, METHOD FOR CONTROLLING SAME, AND ELECTRONIC DEVICE CONFIGURED TO BE DRIVEN BY MOTOR**

(30) Priority: 20.10.2023 KR 20230141246
(71) Applicant: LX Semicon Co., Ltd., Daejeon 34027 (KR)
(72) Inventor: MIN, Chol, Daejeon 34027 (KR); CHOI, Jong Tae, Daejeon 34027 (KR); HA, Jae Hyun, Daejeon 34027 (KR)
(74) Representative: Ter Meer Steinmeister & Partner
(86) International application number: PCT/KR2024/015899
(87) International publication number: WO 2025/084856

(57) **Abstract**

The disclosure is applicable to a motor driving device, and relates to a device for driving, for example, a direct current motor (DC motor), a method for controlling same, and an electronic device configured to be driven by a motor. The disclosure relates to a method for controlling initial driving of a motor comprises: checking whether a back electromotive force (BEMF) voltage is detected from the motor; checking a speed and a rotation direction of the motor to detect the BEMF voltage; determining whether the checked rotation direction of the motor is the same direction as a rotation direction by a currently input command; and driving the motor based on the determination result, wherein the driving the motor includes: a forward direction control mode based on a case in which the checked rotation direction of the motor is the same as the rotation direction by the currently input command, and a reverse direction control mode based on a case in which the checked rotation direction of the motor is opposite to the rotation direction by the currently input command.

## Description

### [Technical Field]

Embodiments of this disclosure are applicable to motor drive devices, for example, and related to a device for driving a direct current motor (DC motor), a method controlling the same, and an electronic device driven by a motor.

### [Background Art]

Recently, a variety of electronic devices, including home appliances such as washing machines and refrigerators, employ brushless direct current (hereinafter, BLDC) motors, which do not utilize commutating brushes and thus exhibit high energy efficiency.

The BLDC motor performs electronic commutation to change the direction of current flowing in armature coils, and when a position of rotor coincides with the commutation timing, a continuous rotating magnetic field is formed to rotate the rotor.

Such BLDC motors are widely used in home appliances such as refrigerators, air purifiers, and air conditioners, as well as information processing devices. A separate sensing device is generally required to detect the rotation speed and rotor position

In a sensorless BLDC motor drive circuit, which does not use a separate sensing device such as a Hall sensor, the position of a permanent magnet of the rotor may be detected by detecting a back electromotive force generated in the coils of the motor.

After detecting the rotation speed and the rotor position, the BLDC motor may be normally controlled. That is, after detecting the rotational speed and the position of the rotor at the beginning, the motor may be driven using the proportional-integral control method using the information.

When such a BLDC motor is initially driven, the motor may not have stopped completely or the motor may be in a state of natural operation due to wind or disturbances.

In electronic device. equipped with BLDC motors, when the motor is being driven by driving the electronic device while the motor is in operation, if a general initial driving sequence is performed, a starting failure may be occurred or it may be determined that there is an error in the electronic device.

In the general BLDC motor control process, it may take some time for the motor to stop completely and to restart after a motor stop command. In other words, it is difficult for the process of stopping the motor and restarting it quickly with a certain sequence.

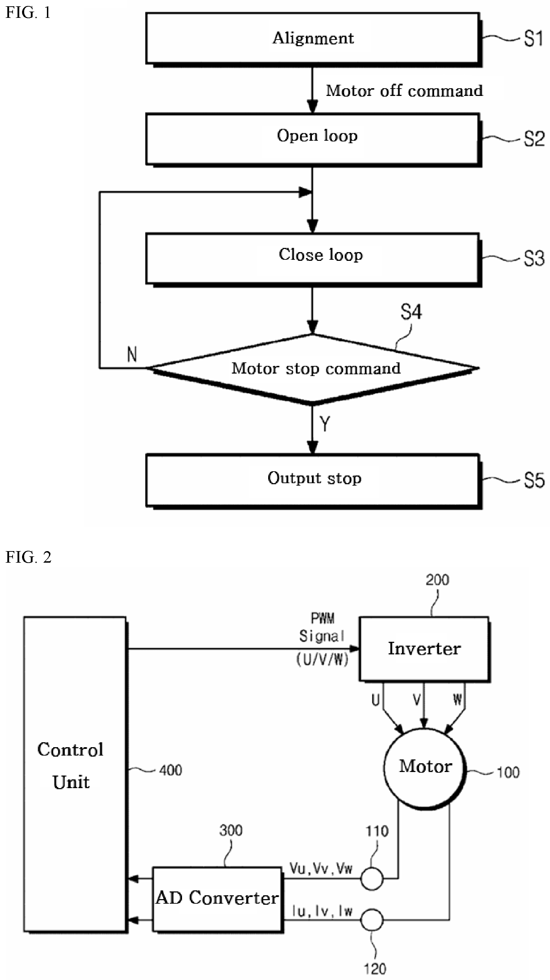

FIG. 1 is a flowchart showing a control process of a conventional BLDC motor.

In the process of controlling the BLDC motor, the alignment process is first carried out S1. The alignment process S1 may be performed primarily to determine a position of the rotor.

Subsequently, an open loop control process S2 may be performed.

The control method using the back electromotive force cannot obtain the position information of the rotor if the rotor is stationary or rotating at low speed. Therefore, it is possible to accelerate from the standstill to a constant speed (i.e., the speed at which the back electromotive force becomes large enough).

Next, a closed-loop control process S3 may be performed.

In this way, if the information of the rotor is known using the back electromotive force, the actual speed and position of the rotor may be determined, and so the feedback control of the motor may be achieved. After that, the motor may be controlled normally according to the user's command.

However, if this process is performed while the motor is not completely stopped or while the motor is operating naturally due to wind or disturbances, a start failure may occur.

Therefore, a solution to such problems is required.

### [Description of Invention]

### [Technical Problem]

Embodiments of the disclosure are intended to provide a motor driving device capable of driving a motor that allows an initial start to be made in a short time without stopping the motor, a control method thereof, and an electronic device driven by the motor.

In addition, embodiments of the disclosure are intended to provide a motor drive device capable of driving a motor that allows the initial start to be made by checking the speed and direction of the motor while the motor is not stopped, a control method thereof, and an electronic device driven by the motor.

In addition, embodiments of the disclosure are intended to provide a motor drive device capable of driving a motor that enables appropriate control according to the direction of rotation of the motor without stopping, a control method thereof, and an electronic device driven by the motor.

### [Technical Solution]

As a first aspect of the disclosure for achieving the above-mentioned object, a method for controlling initial driving of a motor may comprise: checking whether a back electromotive force (BEMF) voltage is detected from the motor; checking a speed and a rotation direction of the motor to detect the BEMF voltage; determining whether the checked rotation direction of the motor is the same direction as a rotation direction by a currently input command; and driving the motor based on the determination result, wherein the driving the motor includes: a forward direction control mode based on a case in which the checked rotation direction of the motor is the same as the rotation direction by the currently input command, and a reverse direction control mode based on a case in which the checked rotation direction of the motor is opposite to the rotation direction by the currently input command.

In an exemplary embodiment, the checking the rotation direction may comprise checking the pattern of the three-phase BEMF voltage waveform output from the motor..

In an exemplary embodiment, the checking the rotation direction of the motor may be performed by comparing magnitudes of second and third phase BEMF voltages when a first phase BEMF voltage becomes minimum and maximum.

In an exemplary embodiment, the checking the rotational direction may be determined as the forward direction when at least one of a first condition and a second condition is satisfied. The first condition is satisfied if the second phase voltage is greater than the third phase voltage when the first phase BEMF voltage becomes minimum, and the second condition is satisfied if the third phase voltage is greater than the second phase voltage when the first phase BEMF voltage becomes maximum.

In an exemplary embodiment, the checking the rotational direction may be determined as the reverse direction when at least one of a third condition and a fourth condition is satisfied. The third condition is satisfied if the third phase voltage is greater than the second phase voltage when the first phase BEMF voltage become minimum, and the fourth condition is satisfied if the second phase voltage is greater than the third phase voltage when the first phase BEMF voltage becomes maximum.

In an exemplary embodiment, the forward direction control mode may comprise: aligning a rotor of the motor based on a case in which the checked speed of the motor is at or below a critical speed; and controlling the motor through an open loop control.

In an exemplary embodiment, the forward direction control mode may comprise controlling the motor through a closed loop control based on a case in which the checked speed of the motor is above a critical speed.

In an exemplary embodiment, the reverse direction control mode may comprise applying a brake pulse until the checked speed of the motor is at or below a critical speed.

As a second aspect of the disclosure for achieving the above-mentioned object, a motor driving device may comprise: an inverter configured to transmit a driving signal to the motor; a sensing unit configured to sense at least one of current and voltage of the motor; and a control unit configured to control the inverter. The control unit may check whether a back electromotive force (BEMF) voltage is detected from the motor, check a speed and a rotation direction of the motor to detect the BEMF voltage, determine whether the checked rotation direction of the motor is the same direction as a rotation direction by a currently input command, and drive the motor in one of a forward direction control mode and a reverse direction control mode according to the result of the determination.

In an exemplary embodiment, the checking the rotational direction may be determined as the forward direction when at least one of a first condition and a second condition is satisfied. The first condition may be satisfied if the second phase voltage is greater than the third phase voltage when the first phase BEMF voltage become minimum, and the second condition may be satisfied if the third phase voltage is greater than the second phase voltage when the first phase BEMF voltage becomes maximum.

In an exemplary embodiment, the checking the rotational direction may be determined as the reverse direction when at least one of a third condition and a fourth condition is satisfied. The third condition may be satisfied if the third phase voltage is greater than the second phase voltage when the first phase BEMF voltage become minimum, and the fourth condition may be satisfied if the second phase voltage is greater than the third phase voltage when the first phase BEMF voltage becomes maximum.

In an exemplary embodiment, the control unit may perform the forward direction control mode based on a case in which the checked rotation direction of the motor is the same as the rotation direction by the currently input command, and the forward direction control mode may align a rotor of the motor and control the motor through open loop control based on a case in which the checked speed of the motor is at or below a critical speed.

In an exemplary embodiment, the control unit may perform the reverse control mode based on a case in which the checked rotation direction of the motor is opposite to the rotation direction by the currently input command. The reverse control mode may apply a brake pulse until the checked speed of the motor is at or below a critical speed.

In an exemplary embodiment, the control unit may include an estimation unit configured to estimate the BEMF voltage from the motor, a calculation unit configured to calculate the speed and rotation direction of the motor according to the BEMF voltage estimated by the estimation unit, a PI controller configured to determine a target speed and a phase by checking an error of the BEMF voltage and determine a current reflection speed for controlling to the target speed; and a PWM signal generation unit configured to generate a PWM signal having period and magnitude according to the speed and phase..

As a third aspect of the disclosure for achieving the above-mentioned object, a device driven by a motor may comprise: a motor; an inverter configured to transmit a driving signal to the motor; a sensing unit configured to sense at least one of current and voltage of the motor; and a control unit configured to control the inverter, wherein the control unit may check whether a back electromotive force (BEMF) voltage is detected from the motor, check a speed and a rotation direction of the motor to detect the BEMF voltage, determine whether the checked rotation direction of the motor is the same direction as a rotation direction by a currently input command, and drive the motor in one of a forward direction control mode and a reverse direction control mode according to the result of the determination,

### [Advantageous Effects]

According to an exemplary embodiment of the disclosure, the following effects are obtained.

First, if the drive signal is applied to the motor while the motor is not stopped, the initial start may be performed in a short time.

In addition, the initial start may be performed by confirming the speed and direction of the motor while the motor is not stopped.

In addition, appropriate control may be performed according to the direction of rotation of the motor while the motor is not stopped.

In addition, the motor may be operated without failing a start in case that the motor is operated in an uncontrolled state of the motor.

In addition, in case that the initial motor start command occurs after a command to stop the motor but before the rotor stops completely, a control may be performed at a current motor operating speed.

Furthermore, according to another embodiment of the disclosure, there are additional technical effects not mentioned herein. A person with ordinary knowledge in the art can understand the purpose of the specification and drawings of the disclosure. a

### [Description of Drawings]

FIG.1 is a flowchart illustrating control processes of a typical BLDC motor.
FIG.2 is a block diagram illustrating a motor drive device of one embodiment of the disclosure.
FIG.3 a block diagram of a circuit configuration of the motor drive device of the embodiment of the disclosure.
FIG. 4 is a block diagram illustrating a motor drive device of the embodiment of the disclosure.
FIG. 5 is a flow chart illustrating motor drive processes of a motor control method according to the embodiment of the disclosure.
FIGS. 6 to 8 are waveform diagrams to illustrate processes of detecting the rotational direction and speed of the motor according to the embodiment of the disclosure.
FIG. 9 is a waveform diagram to illustrate a control process of a forward direction control mode according to the embodiment of the disclosure.
FIG. 10 is a waveform diagram to illustrate a control process of a reverse direction control mode according to the embodiment of the disclosure.

### [Modes of the Invention]

Hereinafter, the embodiments disclosed in the disclosure are described in detail with reference to attached drawings. Identical or similar components are assigned the same reference number, and redundant descriptions thereof are omitted. The suffixes "module" and "part or unit" added to the components used in the following description are given or mixed with each other only for ease of the disclosure preparation, and do not have a distinct meaning or role by themselves.

In addition, in describing the embodiments disclosed in the disclosure, if it is judged that a specific description of a relevant conventional technology may obscure the gist of the embodiments disclosed in the disclosure, the detailed explanation shall be omitted.

In addition, it should be noted that the attached drawings are intended to facilitate the understanding of the embodiments disclosed herein and should not be construed as limiting technical ideas disclosed in this disclosure by the attached drawings.

Furthermore, although each drawing is explained for the convenience of explanation, it is also within the scope of the disclosure even the person with ordinary knowledge in the art combines at least two or more drawings to implement another embodiment.

Also, when elements such as layers, regions, or substrates are referred to as existing "on" other components, it may be understood that they may exist directly on top of other elements, or there may be intermediate elements in between.

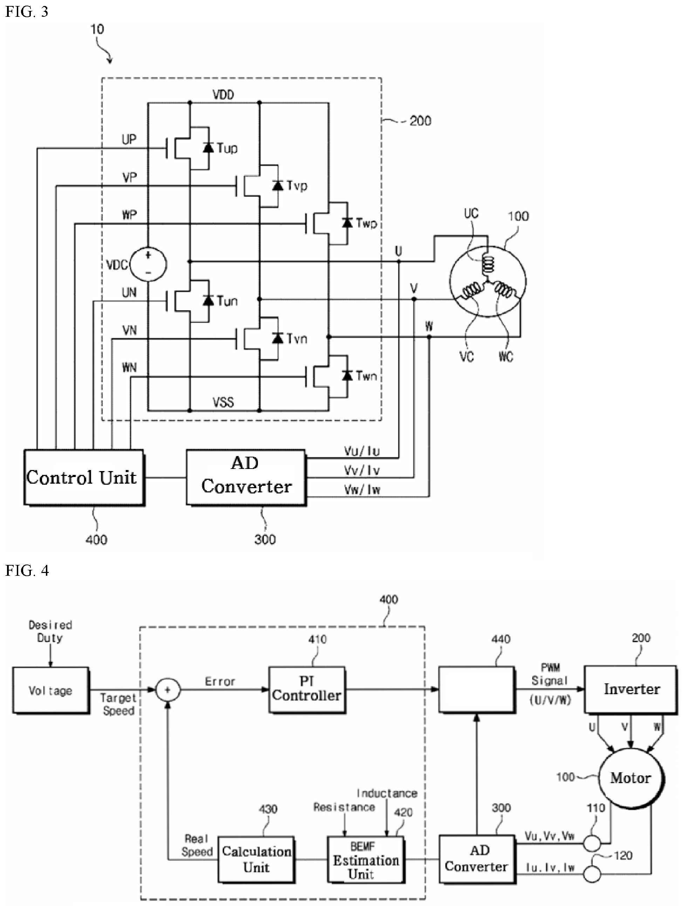

FIG. 2 is a block diagram illustrating a motor drive device according to one embodiment of the disclosure, and FIG. 3 is a block diagram illustrating a circuit configuration of the motor drive device according to the embodiment of the disclosure.

Referring to FIG. 2, a motor drive device 10 according to one embodiment of the disclosure may include drive circuit blocks 200, 300 and 400 for driving a motor 100. For example, the motor drive device 10 may drive a sensorless brushless direct current (BLDC) motor 100. Hereinafter, The BLDC motor 100 is explained as an example of a motor.

The motor drive device 10 may include an inverter 200 that transmits a drive signal to the motor 100, a voltage sensing unit 110 that senses the voltages Vu, Vv and Vw output from the motor 100, a current sensing unit 120 that senses the currents IU, IV and IW output from the motor 100, and a control unit 400 that controls the inverter 200 to drive the motor 100.

In thin embodiment, an example of sensing a three-phase voltage and current to control the motor 100 is described. In addition, the voltage sensing unit 110 and the current sensing unit 120 may be simply expressed as the sensing units 110 and 120. These sensing units 110 and 120 are capable of sensing at least any one of the voltage and current output from the motor 100.

For example, referring to FIG. 3, the motor 100 may include a stator comprising three-phase coils UC, VC and WC having different phases, and a rotor using a permanent magnet. Hereinafter, an example of the inverter 200 driving the sensorless BLDC motor 100 is briefly described.

The stator of the motor 100 may include a first coil UC having a U-phase (first phase), a second coil VC having a V-phase (second phase), and a third coil WC having a W-phase (third phase). The motor 100 may be driven depending on the voltages supplied from the inverter 200 to each of the three-phase coils UC, VC and WC. At this time, magnetic forces generated by the first to third coils UC, VC and WC can rotate the rotor of the motor 100.

The inverter 200 is operated by the control of the control unit 400, and supplies a first supply voltage VDD or a second power supply voltage VSS to each of the three-phase coils UC, VC and WC of the motor 100 through each of first to the three nodes U, V and W, or floats related coils without supplying the first and second power supply voltages VDD and VSS.

The inverter 200 is supplied with the first power supply voltage VDD and the second supply voltage VSS from the power supply unit VDC. The inverter 200 may be supplied with 1-1 and 1-2 coil control signals UP and UN, 2-1 and 2-2 coil control signals VP and VN, and 3-1 and 3-2 coil control signals WP and WN from the control unit 400. The coil control signals UP, UN, VP, VN,

WP and WN supplied from the controller unit 400 may be pulse width modulation (PWM) signals.

The inverter 200 may include a first pull-up transistor Tup and a first pull-down transistor Tun connected in series between a supply line of a first power supply voltage VDD and a supply line of a second power supply voltage VSS to drive the first coil UC of the motor 100.

In addition, the inverter 200 may include a second pull-up transistor TvP and a second pull-down transistor Tvn connected in series between the supply line of the first power supply voltage VDD and the supply line of the second power supply voltage VSS to drive the second coil VC of the motor 100.

In addition, the inverter 200 may include a third pull-up transistor Twp and a third pull-down transistor Twn connected in series between the supply line of the first power supply voltage VDD and the supply line of the second power supply voltage VSS to drive the third coil WC of the motor 100.

The control unit 400 can sense voltage and current signals detected in the motor 100 through the sensing units 110 and 120. At this time, the current signals Iu, Iv and Iw and voltage signals Vu, Vv and Vw sensed in the sensing units 110 and 120 may be converted into a digital signal through the AD converter 300 and input to the control unit 400.

When a user drives an electronic device equipped with the motor 100, for example, a home appliance, the control unit 400 may transmit a drive signal to the motor 100 through the inverter 200 in response to a setting duty by a command of the user. In other words, for example, a motor drive device 10, including the motor 100, may be an electronic device. For example, the motor drive device 10 may be a household appliance such as a refrigerator, air purifier, air conditioner, etc., which is driven by the motor 100. For example, such a motor drive device 10 may correspond to a device comprising the motor 100.

For example, when the user operates the electronic device by setting the drive stage (operating level) of the electronic device, the control unit 400 generates a drive signal of the motor 100 to control the motor 100.

As an exemplary embodiment, in the control unit 400, at a process of controlling the motor 100, an alignment process to determine a position of the rotor 100 may first be performed.

Thereafter, an open loop control process may be performed on the control unit 400.

The control method using the BEMF may not obtain a position information of the rotor if the rotor is stationary or rotating at low speed. Therefore, it is possible to accelerate from a standstill to a certain speed (i.e., the speed at which the BEMF becomes large enough).

Next, in the control unit 400, a close loop control process may be performed. In this way, when the information of the rotor is known using the BEMF, the actual speed and position of the rotor may be determined, thereby capable of controlling the feedback of the motor 100. Thereafter, the motor 100 may be controlled normally according to the user's command.

When the user stops the operation of the electronic device and the drive of the motor 100 is terminated, the rotor of the motor 100 may gradually stop, depending on the type of electronic device. For example, it may take several seconds or tens of seconds for the motor 100 to actually stop after a drive signal for driving the motor 100 is stopped,.

On the other hand, even if the drive signal is not applied to the motor 100, there may be a state in which the motor operates naturally by wind or disturbance.

In this way, the motor 100 is not driven, but the motor 100 may be driven while the motor 100 is actually in operation. For example, while the motor 100 is actually operating, the user may operate the electronic device equipped with the motor 100 to apply a start command (command) to the motor 100.

Then, the control unit 400 may check (confirm) whether the back electromotive force (BEMF) voltage is detected from the motor 100 in response to the start command for driving the motor 100. Whether the BEMF voltage is sensed may be made through the sensing units 110 and 120.

The BEMF signal is an EMF or a voltage hat is pushed against the current that induces it. The BEMF is a voltage drop in an alternating current (AC) circuit due to magnetic induction. Generally, for example, when a BLDC motor is driven through two of the three coils of a three-phase BLDC motor, the BEMF signal may be received through an unused coil. In this case, the unused coil may be described as floating.

At this time, if the BEMF voltage is detected from the motor 100, the control unit 400 can check the speed and rotation direction of the motor 100 using the BEMF voltage. For example, the control unit 400 can check the rotational speed and rotation direction of the rotor of the motor 100. The process of checking the rotational speed and rotation direction of the motor 100 in the control unit 400 will be described in detail later with reference to the attached drawings.

Subsequently, the control unit 400 can determine whether the rotation direction of the confirmed motor 100 is the same direction as the direction of rotation according to a currently input command (a drive command).

Accordingly, the control unit 400 can control the motor 100 in a forward direction control mode based on the case where the rotation direction of the motor 100 is the same as the rotation direction by the currently input command, and in a reverse direction control mode based on the case where the rotation direction of the motor 100 is opposite to the rotation direction by the currently input command.

In an exemplary embodiment, the process of checking the direction of rotation of motor 100 may be accomplished by checking a pattern of the three-phase BEMF voltage waveform output from motor 100.

For example, the process of checking the rotational direction of the motor 100 may be checked by comparing the sizes of the second phase and third phase BEMF voltages when the first phase BEMF voltage becomes minimum and maximum. Here, for example, a first phase, a second phase and a third phase may correspond to phases U, V and W, respectively, but are not limited thereto

In an exemplary embodiment, the process of checking the direction of rotation may be determined as a forward direction when at least one of a first condition and a second condition is satisfied. Herein, the first condition is satisfied if the second phase (e.g., the V-phase) voltage is greater than the third phase (e.g., the W-phase) voltage when the first phase (e.g., the U-phase) BEMF voltage becomes minimum, and the first condition is satisfied if the third phase (e.g., the W-phase) voltage is greater than the second phase (e.g., the V-phase) voltage when the first phase (e.g., the U-phase) BEMF voltage becomes maximum.

In an exemplary embodiment, the process of checking the direction of rotation may be determined as a reverse direction when at least one of a third condition and a fourth condition is satisfied. Herein, the third conditions is satisfied if the third phase (e.g., the W-phase) voltage is greater than the second phase (e.g., the V-phase) voltage when the first phase (e.g., the U-phase) BEMF voltage becomes minimum, and the fourth conditions is satisfied if the second phase voltage (e.g., the V-phase) is greater than the third phase (e.g., the W-phase) voltage when the first phase (e.g., the U-phase) BEMF voltage becomes maximum.

In this way, when the rotation direction of the motor 100 is checked, the control unit 400 may control the motor 100 in the forward direction control mode based on a case that the rotation direction of the motor 100 is the same as the rotation direction by the currently input command and in the reverse direction control mode based on a case where the rotation direction of the confirmed motor 100 is opposite to the rotation direction by the currently entered command.

At this time, in the forward direction control mode, the control unit 400 may align the rotors of motor 100 based on the case where the checked speed of the motor 100 is at or below a critical speed, and may control the motor 100 through an open loop control.

In an exemplary embodiment, in the forward direction control mode, the control unit 400 may control the motor 100 through a close loop control based on the case where the checked speed of the motor 100 is greater than or equal to the critical speed.

On the other hand, in the reverse direction control mode, the control unit 400 may apply a brake pulse until the checked speed of the motor 100 is at or below the critical speed.

In this way, the controller unit 400 performs the forward direction control mode based on the case where the checked rotation direction of the motor 100 is the same as the direction of rotation by the currently input command, and the forward direction control mode may align the rotor of the motor 100 based on the case in which the checked speed of the motor 100 is at or below the critical speed, and control the motor 100 through the open-loop control.

On the other hand, the control unit 400 performs the reverse direction control mode based on the case where the checked direction of rotation of the motor 100 is opposite to the direction of rotation by the currently input command, and the reverse direction control mode allows a brake pulse to be applied until the checked speed of the motor 100 is at or below the critical speed.

This process will be described later in detail with reference to the attached drawings.

FIG. 4 is a block diagram illustrating a motor drive device according to an embodiment of the disclosure.

Referring to FIG. 4, a specific example of implementing the control unit 400 is shown. Here, the control unit 400 may use a proportional-integral control method.

In an exemplary embodiment, the control unit 400 may include an estimation unit 420 configured to estimate the BEMF voltage from the motor 100, a calculation unit 430 configured to calculate the speed and rotation direction of the motor 100 according to the BEMF voltage estimated by the estimation unit 420, and a PI controller 410 configured to determine a target speed and a phase by checking an error of the BEMF voltage, and determine a current reflection velocity to obtain the target speed.

In addition, the control unit 400 may further include a PWM signal generator 440 which is configured to generate a PWM signal having a period and a magnitude according to the speed and phase.

Herein, "Desired Duty" may correspond to a user command. When the user command is entered, the user command is transmitted to the PI controller 410, and then a target speed of the motor 100 in consideration of the BEMF voltage error may be determined.

The PWM signal generator 440 may generate a PWM signal with period and magnitude according to the determined velocity and phase.

The BEMF voltage may be converted into a digital signal by the AD converter 300 and applied to either the estimation unit 420 or the PWM signal generator 440.

Through this process, the PWM signal with the period and the magnitude according to the speed and phase determined according to the duty by the user command may be applied to the inverter 200.

The sensing unit 110 and 120 may sense the three-phase voltage, and the estimation unit 420 may estimate the three-phase BEMF voltage through the sensed three-phase voltage. The calculation unit 430 may calculate the speed and rotation direction of the motor 100 according to the estimated BEMF voltage.

In the case of the initial operation of the motor 100, the motor 100 may not be in a state of complete stopping, or the motor 100 may be in a state of natural operation by wind or disturbance.

In this way, in an electronic device to which the motor 100 is applied, when the motor 100 is in operation and the electronic device is driven to drive the motor 100, if a general initial operation sequence is performed, a failure to start or it may be determined that there is an error in the electronic device..

In a control process of the general motor 100, it may take time for the motor 100 to actually stop completely and for an operation to start anew after a motor stop command. In other words, it is difficult for the motor 100 to stop and restart again in a constant sequence and to be carried out quickly.

However, according to the embodiment of the disclosure as described above, the rotational speed and direction of such a motor 100 may be determined using the back electromotive force voltage, thereby capable of controlling the motor 100 in the forward direction control mode or the reverse direction control mode.

Therefore, even if the motor 100 is operated while the motor 100 is not stopped, the initial start may be made in a short time. In this way, while the motor 100 is not stopped, appropriate control may be made according to the direction of rotation of the motor 100.

In addition, if the motor 100 is operated in an uncontrolled state, the motor 100 may be operated without a failure to start.

In addition, if a restart command for the motor 100 occurs after a command to stop the motor 100 and before the rotor of the motor 100 completely stops, it is possible to control the motor 100 at a current operating speed of the motor 100.

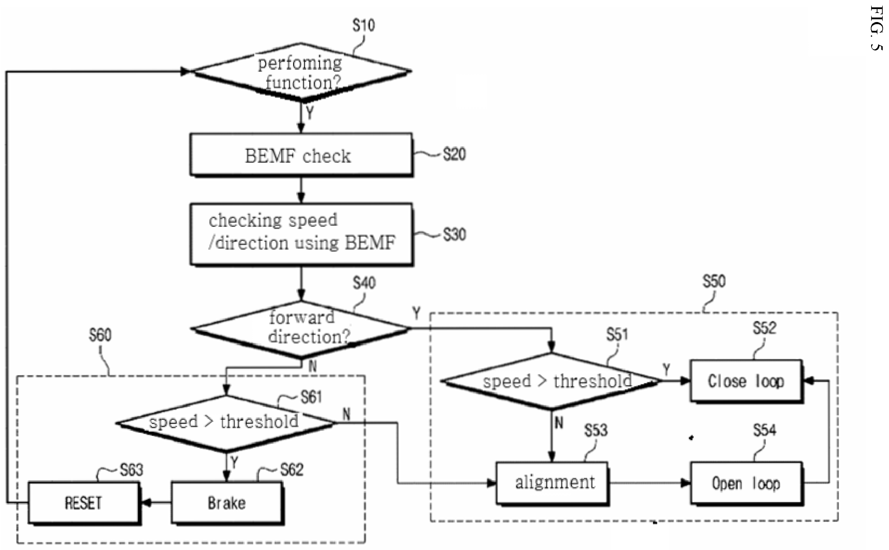

FIG. 5 is a flow chart illustrating motor operating processes of a motor control method according to one embodiment of the disclosure.

Referring to FIG. 5, the operation processes of the motor 100 are described step by step. The operation processes may be performed in the control unit 400 described above..

When the user stops the operation of the electronic device and the operation of the motor 100 is terminated, the rotor of the motor 100 may gradually stop, depending on the type of electronic device. For example, after the drive signal to drive the motor 100 is stopped, it may take several seconds or tens of seconds for the motor 100 to actually stop.

On the other hand, even if the drive signal is not applied to the motor 100, there may be a state in which the motor 100 operates naturally by wind or disturbance.

In this way, the motor 100 is not driven, but the motor 100 may be driven while the motor 100 is actually in operation. For example, while the motor 100 is actually operating, the user may operate the electronic device equipped with the motor 100 to apply a start command (command) to the motor 100.

Then, first, for example, when a start command (command) is applied to the motor 100 while the motor 100 is operating, it is possible to check whether the function of performing control by checking the rotational speed and direction of the motor 100 has been executed (S10).

If it is confirmed that such a function has been executed, it may be checked (confirmed) whether a back electromotive force (BEMF) voltage is detected from the motor 100 in response to a start command to drive such motor 100 (S20). Whether such a BEMF voltage is sensed may be implemented through the sensing units 110 and 120.

If the BEMF voltage is detected from the motor 100, a process of checking the speed and rotation direction of the motor 100 may be performed subsequently using the BEMF voltage (S30).

Subsequently, it is possible to determine whether the checked rotation direction of the motor 100 is the same direction as the rotation direction by the currently input command (drive command or operation command) (S40).

Accordingly, the motor 100 may be controlled in a forward direction control mode (S50) based on the case where the checked rotation direction of the motor 100 is the same as the rotation direction by the currently input command, and controlled in a reverse direction control mode (S60) based on the case where the checked rotation direction of the motor 100 is opposite to the rotation direction by the currently input command.

At this time, in the forward direction control mode S50, firstly, it is possible to determine whether the SPEED of the identified motor 100 is above or below a critical speed (threshold) (S51).

If the checked speed of the motor 100 is at or below the critical speed (threshold), the initial motor drive sequence may be performed. In other words, the rotor of the motor 100 may be aligned (S53), and be controlled through an open loop control (S54).

On the other hand, if the checked speed of the motor 100 is greater than the threshold, the motor 100 may be controlled in a close loop. For example, if the speed of the motor 100 is greater than the critical speed (threshold), it is possible to perform the close loop control directly without going through the alignment and the open loop process. Accordingly, the motor 100 may be controlled normally according to the user's commands.

In the reverse direction control mode (S60), firstly, it is possible to determine whether the checked speed of the motor 100 is above or below the critical speed (S61).

At this time, if the checked speed of the motor 100 is at or below the critical speed (threshold), the initial motor drive sequence may be performed. In other words, according to the forward direction control mode (S50), the rotor of the motor 100 may be aligned (S53), and the motor 100 may be controlled through the open loop control (S54).

On the other hand, if the checked speed of the motor 100 is greater than the critical speed (threshold), a brake pulse may be applied until the checked speed of the motor 100 is at or below the critical speed (threshold) (S62).

In this way, when the speed of the motor 100 is at or below the critical speed by applying the brake pulse (RESET) (S63), the rotor of the motor 100 is realigned (S53) according to the forward direction control mode (S50), and the motor 100 may be controlled through the open loop control (S54).

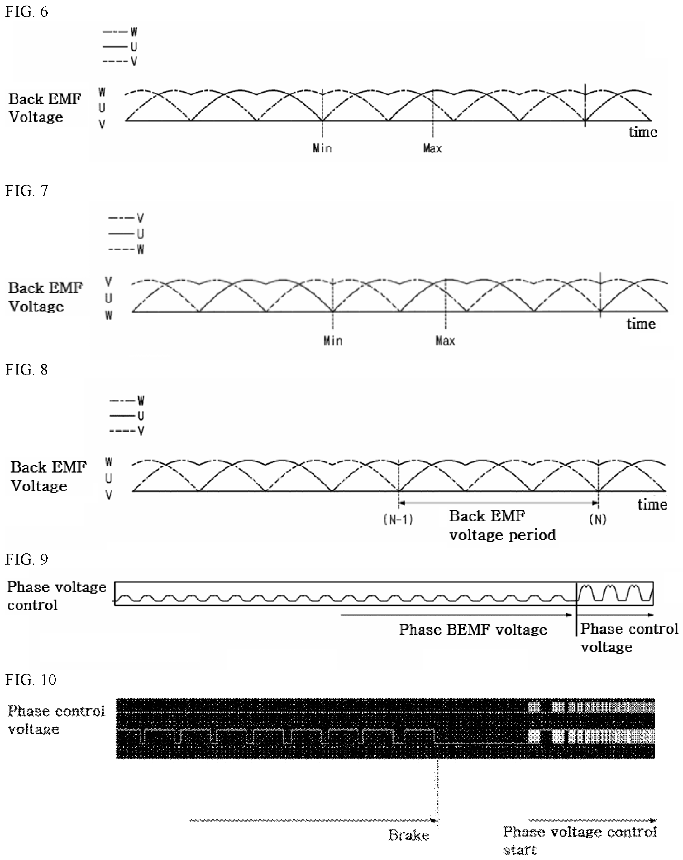

FIGS. 6 to 8 are waveform diagrams to describe processes of detecting the rotational direction and speed of the motor according to one embodiment of the disclosure.

As described above, the process of checking the rotation direction of the motor 100 may be done by checking the pattern of the three-phase BEMF voltage waveform output from the motor 100.

For example, the process of checking the rotational direction of the motor 100 may be checked by comparing the magnitude of the second phase and third phase BEMF voltage when the first phase BEMF voltage becomes minimum and maximum. The first phase, the second phase and the third phase 3 correspond to U-phase, V-phase and W-phase, respectively.

Referring to FIG. 6, it may be determined in a forward direction under a first condition and a second condition. The first condition is satisfied if the V-phase voltage is greater than the W-phase voltage when the U-phase BEMF voltage is minimal. The second condition is satisfied if the W-phase voltage is greater than the V-phase voltage when the U-phase BEMF voltage is maximized.

Here, if either the first condition or the second condition is satisfied, it may be determined in the forward direction. However, it may be determined in the forward direction if both the first and second conditions are satisfied in order to improve the accuracy of the determination according to an embodiment.

On the other hand, referring to FIG. 7, it may be determined in a reverse direction under a third condition and a fourth condition. The third condition is satisfied if the W-phase voltage is greater than the V-phase voltage when the U-phase BEMF voltage is minimal. The fourth condition is satisfied if the V-phase voltage is greater than the W-phase voltage when the U-phase BEMF voltage is maximized.

Here, if either the third condition or the fourth condition is satisfied, it may be determined in the reverse direction. However, it may be determined in the reverse direction if both the third and fourth conditions are satisfied in order to improve the accuracy of the determination according to an embodiment.

Referring FIG. 8, the velocity (rpm) detection may be made using a time between the minimum or maximum values of the BEMF voltage value of one of the three phases.

For example, the speed (rpm) may be calculated as (1/Time)*60/pole. Here, 'Time' means the time between the minimum or maximum values of the BEMF voltage value. A pole is the number of poles applied to the stator of a motor.

FIG. 9 is a waveform diagram to illustrate the control process of the forward direction control mode according to one embodiment of the disclosure. FIG. 10 is a waveform diagram to illustrate the control process of the reverse direction control mode according to one embodiment of the disclosure.

As described above, the motor 100 may be controlled differently depending on whether the speed of the motor 100 checked in the forward direction control mode (S50) and the reverse direction control mode (S60) is above or below the critical speed (threshold).

That is, after the process of checking the rotational speed (period) and direction using the BEMF phase voltage (Phase BEMF) of the motor (100) is completed, the control process of the forward control mode (S50) and the reverse control mode (S60) may be performed.

Referring to FIG. 9, after the process of checking the rotational speed (period) and direction using the BEMF phase voltage (Phase BEMF) of the motor (100) is completed, according to the forward direction control mode (S50), a phase voltage (phase control voltage) for controlling the motor (100) may be applied according to the forward control mode (S50).

At this time, as described above, the initial motor drive sequence may be performed or the motor 100 may be controlled in a closed loop depending on whether the checked speed of the motor 100 is above or below the critical speed (threshold).

On the other hand, referring to Figure 10, after the process of checking the rotational speed (period) and direction using the BEMF phase voltage (Phase BEMF) is completed, the control process of the reverse direction control mode (S60) may be carried out depending on whether the checked speed (SPEED) of the motor 100 is above or below the critical speed (threshold).

First, after reverse direction is recognized, if the checked speed (SPEED) of the motor (100) is greater than the critical speed (threshold), a brake pulse may be applied until the speed of the motor 100 becomes less than or equal to a certain speed. Subsequently, when the speed of the motor (100) becomes less than or equal to the critical speed (threshold), the initial motor driving sequence may be performed.

The above description is merely an illustrative explanation of the technical concept of the disclosure, and those skilled in the art to which the disclosure pertains may make various modifications and variations within the scope of essential characteristics of the disclosure.

Therefore, the embodiments disclosed in the disclosure are intended to illustrate, not to limit the technical concepts of the disclosure, and the scope of the technical concepts of the disclosure is not limited by these embodiments.

The scope of protection of the disclosure shall be interpreted by the claims below, and all technical concepts within the equivalent scope shall be interpreted as being included within the scope of rights of the disclosure.

## Claims

1. A method for controlling initial driving of a motor, comprising:
checking whether a back electromotive force (BEMF) voltage is detected from the motor;
checking a speed and a rotation direction of the motor to detect the BEMF voltage;
determining whether the checked rotation direction of the motor is the same direction as a rotation direction by a currently input command; and
driving the motor based on the determination result,
wherein the driving the motor includes:
a forward direction control mode based on a case in which the checked rotation direction of the motor is the same as the rotation direction by the currently input command, and
a reverse direction control mode based on a case in which the checked rotation direction of the motor is opposite to the rotation direction by the currently input command.

2. The method of claim 1, wherein the checking the rotation direction of the motor is performed by comparing magnitudes of second and third phase BEMF voltages when a first phase BEMF voltage becomes minimum and maximum.

3. The method of claim 1 or 2, wherein the checking the rotation direction is determined as the forward direction when at least one of a first condition and a second condition is satisfied,
wherein the first condition is satisfied if the second phase voltage is greater than the third phase voltage when the first phase BEMF voltage becomes minimum, and the second condition is satisfied if the third phase voltage is greater than the second phase voltage when the first phase BEMF voltage becomes maximum.

4. The method of claim 1 or 2, wherein the checking the rotation direction is determined as the reverse direction when at least one of a third condition and a fourth condition is satisfied,
wherein the third condition is satisfied if the third phase voltage is greater than the second phase voltage when the first phase BEMF voltage becomes minimum, and the fourth condition is satisfied if the second phase voltage is greater than the third phase voltage when the first phase BEMF voltage becomes maximum.

5. The method of any one of the preceding claims, wherein the forward direction control mode comprises:
aligning a rotor of the motor based on a case in which the checked speed of the motor is at or below a critical speed; and
controlling the motor through an open loop control.

6. The method of any one of the preceding claims, wherein the forward direction control mode comprises controlling the motor through a closed loop control based on a case in which the checked speed of the motor is equal to or greater than a critical speed.

7. The method of any one of the preceding claims, wherein the reverse direction control mode comprises of applying a brake pulse until the checked speed of the motor is at or below a critical speed.

8. A motor driving device, comprising:
an inverter configured to transmit a driving signal to the motor;
a sensing unit configured to sense at least one of current and voltage of the motor; and
a control unit configured to control the inverter, wherein the control unit:
checks whether a back electromotive force (BEMF) voltage is detected from the motor;
check a speed and a rotation direction of the motor to detect the BEMF voltage;
determines whether the checked rotation direction of the motor is the same direction as a rotation direction by a currently input command; and
drives the motor in one of a forward direction control mode and a reverse direction control mode according to the result of the determination.

9. The motor driving device of claim 8, wherein
the control unit determines as the forward direction when at least one of a first condition and a second condition is satisfied, and
wherein the first condition is satisfied if the second phase voltage is greater than the third phase voltage when the first phase BEMF voltage becomes minimum, and the second condition is satisfied if the third phase voltage is greater than the second phase voltage when the first phase BEMF voltage becomes maximum.

10. The motor driving device of claim 8 or 9, wherein
the control unit determines as the forward direction when at least one of a third condition and a fourth condition is satisfied, and
wherein the third condition is satisfied if the third phase voltage is greater than the second phase voltage when the first phase BEMF voltage becomes minimum, and the fourth condition is satisfied if the second phase voltage is greater than the third phase voltage when the first phase BEMF voltage becomes maximum.
